# EUROPÄISCHE PATENTSCHRIFT

(11) **EP 3 724 003 B1**
(45) Veröffentlichungstag und Bekanntmachung des Hinweises auf die Patenterteilung: **19.01.2022**
(21) Anmeldenummer: 18782349.7
(22) Anmeldetag: 25.09.2018
(51) Int. Cl.: B60C 9/00, B60C 9/20, D02G 3/48

(54) **FESTIGKEITSTRÄGERLAGE UND FAHRZEUGLUFTREIFEN**
REINFORCING LAYER AND PNEUMATIC VEHICLE TYRE
COUCHE DE RENFORT ET PNEUMATIQUE DE VÉHICULE

(30) Priorität: 13.12.2017 DE 102017222606
(43) Veröffentlichungstag der Anmeldung: 21.10.2020
(73) Patentinhaber: Continental Reifen Deutschland GmbH, 30165 Hannover (DE)
(72) Erfinder: REESE, Wolfgang, 30419 Hannover (DE); SCHUNACK, Michael, 30419 Hannover (DE)
(74) Vertreter: Continental Corporation
(86) Internationale Anmeldenummer: PCT/EP2018/075875
(87) Internationale Veröffentlichungsnummer: WO 2019/115040

(56) Entgegenhaltungen:
- WO-A1-2014/001039
- WO-A1-2017/048208
- DE-A1-102014 205 700

## Beschreibung

Die Erfindung betrifft eine Festigkeitsträgerlage für elastomere Erzeugnisse, insbesondere für die Gürtelbandage, wobei die Festigkeitsträgerlage Hybridkorde als Festigkeitsträger aufweist, die innerhalb der Lage im Wesentlichen parallel zueinander angeordnet und in elastomeres Material eingebettet sind, wobei die Hybridkorde genau drei Garne aufweisen, wobei ein erstes Garn der Garne aus Polyamid ist und wobei alle Garne eines Hybridkordes miteinander endverdreht sind. Des Weiteren betrifft die Erfindung einen Fahrzeugluftreifen, der wenigstens eine erfindungsgemäße Festigkeitsträgeralge enthält.

Festigkeitsträger zur Verstärkung verschiedener elastomerer Erzeugnisse sind hinreichend bekannt. So ist für Fahrzeugluftreifen bekannt, eine Gürtelbandage zu verwenden, die ein- oder mehrlagig ausgebildet ist, die Gürtelränder abdeckt und parallel und im wesentlichen in Umfangsrichtung verlaufende Festigkeitsträger in Form von im Gummi eingebetteten Korden enthält. Diese Gürtelbandage dient dazu, insbesondere im Hochgeschwindigkeitseinsatz, eine Erhebung des Reifen durch die im Fahrbetrieb auftretenden Fliehkräfte zu verhindern.

Die Bandage wird bei der Reifenherstellung in Form von Lagen, Streifen oder Einzel-Korden mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in der der fachkundigen Person bekannten Art mit einer Imprägnierung vorbehandelt sind, in Längsrichtung einen Kalander oder einen Extruder zur Ummantelung mit der Kautschukmischung durchlaufen.

Bei der Bombage mit bisher im Einsatz befindlichen Vorrichtungen und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird. Bei neueren Aufbautrommeln wird bei der Reifenherstellung von Reifen für den Ultra-Hochgeschwindigkeits-Einsatz etwa 1% Dehnung in der Schulter und etwa 3% Dehnung im Zenit gefordert. Ein weiteres Problem besteht in dem Schrumpfverhalten des jeweiligen Kordmaterials bei erhöhter Temperatur. Ein geringeres Schrumpfverhalten bedingt eine höhere Dimensionsstabilität des Fahrzeugreifens und somit ein besseres, der fachkundigen Person bekanntes, Flatspotverhalten (= reversible plastische Abplattungen in der Bodenaufstandsfläche beim Parken).

Die Korde der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit, d.h. eine gute Dimensionsstabilität, gewährleisten. Um diesen Anforderungen zu genügen, sollten sich die Korde bis zu einer Dehnung von ca. 3 bis 4 % mit mäßigem Kraftaufwand und ab einer höheren Dehnung nur noch mit sehr hohem Kraftaufwand dehnen lassen.

Der Wulstverstärker ist ganz oder teilweise im Wulstbereich angeordnet. Üblicherweise ist er axial außerhalb und anschließend an die Karkasse positioniert. Der Wulstverstärker beinhaltet zumindest eine Festigkeitsträgerlage, welche ringkreisförmig im Bereich des Wulstes um den Reifen umläuft.

Auch für Fördergurte, Antriebsriemen, Schläuche und Luftfederbälge ist der Einsatz von Festigkeitsträgern mit auf die Anforderungen abgestimmten physikalischen Eigenschaften notwendig.

Eine Festigkeitsträgerlage eingangs genannter Art ist beispielsweise aus der DE 10 2014 205 700 A1 bekannt. Die Festigkeitsträgerlage ist insbesondere eine Karkasslage und enthält parallel zueinander angeordnete Hybridkorde. Die Hybridkorde weisen ein erstes und ein zweites textiles Garn auf, wobei das erste textile Garn ein Polyoxadiazolgarn ist und das zweite textile Garn einen Elastizitätsmodul aufweist, welches mindestens dem Dreifachen des Elastizitätsmoduls des Polyoxadiazolgarns entspricht. Gemäß den Ausführungsbeispielen weist der Hybridkord genau drei Garne auf, wobei ein Garn ein Aramidgarn, also ein spezifisches Polyamidgarn, ist und wobei die Garne endverdreht sind. Die Festigkeitsträgerlage weist eine gute Haltbarkeit auf und verbessert den Fahrzeugluftreifen im Hinblick auf seinen Rollwiderstand.

Aus der WO 2017/048208 A1 ist ein weiterer Hybridkord für eine Gürtelbandage eines Fahrzeugluftreifens, welcher insbesondere ein PKW-Reifen ist, bekannt. Der Hybridkord weist zumindest zwei Garne auf, wobei ein Garn aus aliphatischem Polyamid und ein Garn aus Polyester besteht. Der Hybridkord soll zur Hochgeschwindigkeitseignung des Reifens beitragen sowie einen geringen Rollwiderstand ermöglichen.

Aus der US 7,252,129 B2 ist ein Hybridkord bestehend aus Aramidfasern und einer weiteren Faser ausgewählt aus der Gruppe bestehend aus Polyester, Nylon und Rayon bekannt. Dieser Hybridkord gewährleistet eine geringere Separierung der einzelnen Fäden der Festigkeitsträgerlage. Nachteilig an Aramid ist, dass es eine vergleichsweise geringe Bruchdehnung aufweist und in der Anschaffung kostenintensiv ist.

Aus der WO 2014/001039 A1 ist eine einlagige Gürtelbandage eines Fahrzeugluftreifens bekannt, wobei die Festigkeitsträger der Gürtelbandage Hybridkorde der Konstruktion Polyamid 6.6 940x1 + HMLS-PET 1100x1 sind. Eine solche Gürtelbandage weist zwar ein vorteilhaftes Kraft-Dehnungs-Verhalten auf. Die Zugkraft einer solchen Gürtelbandage ist bei einer Dehnung ab 4% für den Ultra-Hochgeschwindigkeits-Einsatz zu gering, um die im Ultra-Hochgeschwindigkeits-Einsatz auftretenden Fliehkräfte ausreichend zu bündeln. Um die im Ultra-Hochgeschwindigkeits-Einsatz auftretenden Fliehkräfte ausreichend zu bündeln ist es bekannt, die Gürtelbandage mit zwei Festigkeitsträgerlagen auszustatten. Die Festigkeitsträger jeder Festigkeitsträgerlage sind dabei Korde aus zwei miteinander endverdrehten Garnen aus Polyamid 6.6 der Feinheit 1400 dtex. Die Korde sind mit einer Fadendichte von 110 epdm innerhalb der jeweiligen Festigkeitsträgerlage angeordnet. Nachteilig ist allerdings, dass die bekannte Gürtelbandage aus zwei Festigkeitsträgerlagen einen für den Rollwiderstand nachteiligen hohen Materialeinsatz an elastomerem Material aufweist. Weiter weisen die Korde aus Polyamid 6.6 ein nachteiliges Schrumpfverhalten auf, wodurch die Dimensionsstabilität und das Flatspotverhalten beeinträchtigt sind.

Eine der Aufgaben der Erfindung besteht nun darin, eine Festigkeitsträgerlage für elastomere Erzeugnisse bereitzustellen, die eine höhere Zugkraft bei einer Dehnung ab 4% aufweist und die ein geringeres Schrumpfverhalten pro Feinheit des Festigkeitsträgers aufweist.

Gelöst wird die Aufgabe erfindungsgemäß, indem die drei Garne vom ersten Garn aus Polyamid, einem zweiten Garn aus High Modulus Low Shrinkage Polyethylenterephthalat (HMLS-PET) und einem dritten Garn gebildet sind, wobei das dritte Garn aus dem Material des ersten Garns oder aus dem Material des zweiten Garns ausgebildet ist und wobei die Feinheit jedes Hybridkordes mindestens 5000 dtex beträgt.

Eine weitere Aufgabe der Erfindung besteht darin, einen Fahrzeugluftreifen bereitzustellen, der einen geringeren Rollwiderstand sowie ein geringeres Schrumpfverhalten aufweist.

Gelöst wird diese Aufgabe dadurch, dass der Fahrzeugluftreifen eine erfindungsgemäße Festigkeitsträgerlage für elastomere Erzeugnisse enthält.

Im Rahmen der vorliegenden Erfindung stellen Korde linienförmige Gebilde dar, die aus zwei oder mehr miteinander verdrehten Garnen bestehen. Ein Hybridkord stellt einen Kord dar, bei dem sich zumindest zwei Garne in ihrem Material unterscheiden. Ein Garn ist im Rahmen der vorliegenden Erfindung in Anlehnung an die DIN 60900 ein linienförmiges Gebilde, das aus einzelnen Filamenten oder Fasern besteht. Die Begriffe Garn aus Polyester und Polyestergarn sowie Garn aus Polyamid und Polyamidgarn werden im Rahmen der Erfindung synonym verwendet. Ein Garn aus einem Material ist ganz oder teilweise aus diesem Material gebildet.

Kraft-Dehnungs-Werte und/oder die Zugkraft bei Dehnung können ermittelt sein gemäß ASTM D 885.

Die Hybridkorde der erfindungsgemäßen Festigkeitsträgerlage weisen genau drei Garne auf, welche miteinander endverdreht sind. Die drei Garne sind dabei das erste Garn aus Polyamid, das zweite Garn aus HMLS-PET sowie das dritte Garn, welches aus dem Material des ersten Garns oder aus dem Material des zweiten Garns ausgebildet ist.

Der Hybridkord ist somit asymmetrisch aufgebaut und weist entweder zwei erste Garne aus Polyamid und ein zweites Garn aus HMLS-PET oder ein erstes Garn aus Polyamid und zwei zweite Garne aus HMLS-PET auf.

Überraschenderweise wurde gefunden, dass sich eine solche Festigkeitsträgerlage aufweisend solche asymmetrische Hybridkorde durch eine deutlich erhöhte Zugkraft der Festigkeitsträgerlage bei einer Dehnung ab 4 % sowie durch ein geringeres Schrumpfverhalten pro Feinheit des Festigkeitsträgers auszeichnet.

Erstaunlicherweise weist die Festigkeitsträgerlage mit den asymmetrischen Hybridkorden aufweisend sowohl zumindest ein Garn aus Polyamid als auch zumindest ein Garn aus HMLS-PET stark verbesserte Zugkrafteigenschaften auf. Erstaunlicherweise weisen die Hybridkorde ein für die Anwendung in einer Festigkeitsträgerlage der Gürtelbandage ein hervorragend geeignetes Kraft-Dehnungs-Verhalten auf.

Die Hybridkorde weisen eine Feinheit von mindestens 5000 dtex auf. Erstaunlicherweise hat es sich gezeigt, dass eine einzige erfindungsgemäße Festigkeitsträgerlage mit Hybridkorden dieser Feinheit eine ausreichende Festigkeit aufweist, um, z.B. im Fahrzeugluftreifen in der Gürtelbandage, zwei der beschriebenen Festigkeitsträgerlagen aus Korden aus je zwei Garnen aus Polyamid 6.6 zu ersetzen. Bei einer geringeren Feinheit wäre eine ausreichende Festigkeit nicht mehr gegeben. Das Ersetzen von zwei Festigkeitsträgerlagen durch nur eine Festigkeitsträgerlage führt zu einer signifikanten Reduktion an Gewicht und an Material, insbesondere an elastomerem Material, und somit zu einer vorteilhaften Reduktion des Rollwiderstands.

Durch die deutlich verbesserte Zugkraft der Festigkeitsträgerlage ist es somit ermöglicht, auch bei Reifen für den Ultra-Hochgeschwindigkeits-Einsatz die Gürtelbandage nur einlagig auszuführen. Die erfindungsgemäße Festigkeitsträgerlage ist somit als einzige Festigkeitsträgerlage der Gürtelbandage ausgebildet.

Der Hybridkord aus sowohl zumindest einem Garn aus Polyamid und zumindest einem Garn aus PET weist einen geringeren relativen Anteil an Polyamid auf als ein Vergleichskord aus nur Garnen aus Polyamid. HMLS-PET weist einen vorteilhaften geringeren Schrumpf auf als Polyamid. Somit ist das Schrumpfverhalten pro Feinheit des Festigkeitsträgers verringert. Diese Garne aus HMLS-PET weisen eine gute thermische Stabilität auf, wodurch sie den Anforderungen in den genannten Anwendungen gerecht werden; wie z.B. der Ultra-Hochgeschwindigkeitstauglichkeit bei der Anwendung im Fahrzeugluftreifen.

Ein Fahrzeugluftreifen, der eine erfindungsgemäße Festigkeitsträgerlage in wenigstens einem Bauteil enthält, weist eine erhöhte Dimensionsstabilität, eine besonders gute Ultra-Hochgeschwindigkeitstauglichkeit auf. Abplattungen bei Last (Flatspotting) sind reduziert. Bevorzugt ist die erfindungsgemäße Festigkeitsträgerlage als Gürtelbandage ausgebildet, um die genannten Vorteile zu erreichen. Weiter ist der Rollwiderstand reduziert.

Das Polyamid des ersten Garns aus Polyamid ist ausgewählt aus der Gruppe bestehend aus Polyamid 6 (PA 6) und/oder Polyamid 6.6 (PA 6.6) und/oder Polyamid 12 (PA 12) und/oder Polyamid 11 (PA 11) und/oder Polyamid 13.13 (PA 13.13) und/oder Polyamid 4 (PA 4) und/oder Polyamid 7 (PA 7) und/oder Polyamid 8 (PA 8) und/oder Polyamid 9 (PA 9) und/oder Polyamid 4.6 (PA 4.6) und/oder Polyamid 6.10 (PA 6.10) und/oder Polyamid 6.12 (PA 6.12) und/oder Polyamid 6.9 (PA 6.9) und/oder Polyamid 66/6 (PA 66/6). Bevorzugt ist die Verwendung von PA 6 und/oder PA 6.6, besonders bevorzugt ist die Verwendung von PA 6.6.

Ein Garn aus PA 6.6 weist eine vorteilhafte gute Haftung für die Einbindung in das elastomere Material auf und eignet sich auch hinsichtlich seines Elastizitätsmoduls hervorragend für den Einsatz als Festigkeitsträger einer Gürtelbandage. Gleichzeitig weist es eine gute Marktverfügbarkeit auf und ist kostengünstig in der Anschaffung.

In einer bevorzugten Ausführungsform sind genau zwei Garne des Hybridkords hinsichtlich ihres Materials und ihrer Feinheit gleich ausgebildet. Der Hybridkord weist also entweder zwei Garne aus einem Polyamid, bevorzugt aus PA 6.6, der gleichen Feinheit, oder zwei Garne aus HMLS-PET der gleichen Feinheit auf. Hierdurch ist die Komplexität des Hybridkords hinsichtlich seines Aufbaus und seiner Herstellung reduziert.

Vorteilhaft ist es, wenn jedes der drei Garne des Hybridkords jeweils eine Feinheit von 1000 dtex bis 3000 dtex, bevorzugt eine Feinheit von 1000 dtex bis 2500 dtex, besonders bevorzugt eine Feinheit von 1500 dtex bis 2200 dtex, aufweist. Bei einer geringeren Feinheit als 1000 dtex wäre die Festigkeit des Hybridkords aus genau drei Garnen nicht mehr gegeben. Eine größere Feinheit als 3000 dtex der Garne bringt durch unnötig viel Material Nachteile mit sich, wie z.B. Rollwiderstands-Nachteile bei der Anwendung im Fahrzeugluftreifen. Erstaunlicherweise ist eine Feinheit von maximal 2500 dtex, teilweise auch von maximal 2200 dtex, bereits ausreichend um ein vorteilhaftes Kraft-Dehnungsverhalten des Hybridkordes zu erreichen.

Jedes Garn der erfindungsgemäßen Festigkeitsträgerlage kann in S- oder in Z- Richtung verdreht sein. Vorteilhafterweise weisen die drei Garne des Hybridkords die gleiche Drehrichtung auf. Sie sind also entweder alle in S- und/oder in Z- Richtung verdreht.

Erfindungsgemäß sind die drei Garne in S- oder in Z-Richtung zu einem Hybridkord miteinander endverdreht. Vorteilhafterweise ist die Drehrichtung zum Hybridkord der Drehrichtung der Garne entgegengesetzt. Hierdurch sind interne Spannungen im Hybridkord reduziert.

In einer Ausführungsform sind die Hybridkorde mit einer Fadendichte von 50 epdm bis 90 epdm, bevorzugt von 60 epdm bis 80 epdm, innerhalb der Festigkeitsträgerlage angeordnet. Bereits diese geringe Dichte gewährleistet eine ausreichende Zugkraft bei der Anwendung im Fahrzeugluftreifen, insbesondere um als einlagige Gürtelbandage die im Ultra-Hochgeschwindigkeitseinsatz auftretenden Fliehkräfte ausreichend zu bündeln. Diese relativ geringe Fadendichte ist vorteilhaft, da infolge geringerer Scherspannungen in der Gummierung die Haltbarkeit der Festigkeitsträgerlage bzw. des Elastomerprodukts erhöht ist.

Eine vorteilhafte erfindungsgemäße Festigkeitsträgerlage ist gegeben, indem die Hybridkorde die Konstruktion Polyamid 6.6 2100x2 + HMLS-PET 2200x1 aufweisen und mit einer Fadendichte von 70 epdm bis 90 epdm innerhalb der Festigkeitsträgerlage angeordnet sind. Eine solche Festigkeitsträgerlage weist ein für den Einsatz als einzige Festigkeitsträgerlage der Gürtelbandage vorteilhaftes Kraft-Dehnungs-Verhalten bei gleichzeitig hoher Zugkraft und geringem Schrumpfverhalten auf. Im Vergleich zu einer zweilagigen Konstruktion ist zudem der Rollwiderstand verringert. Zweckmäßig ist es, wenn die Fadendichte 80 epdm beträgt.

Entsprechende Vorteile ergeben sich, wenn die Hybridkorde die Konstruktion Polyamid 6.6 2100x1 + HMLS-PET 2200x2 aufweisen und mit einer Fadendichte von 50 epdm bis 70 epdm innerhalb der Festigkeitsträgerlage angeordnet sind. Die nochmals verringerte Fadendichte ergibt weitere Vorteile in der Haltbarkeit der Festigkeitsträgerlage. Zweckmäßig ist es, wenn die Fadendichte 60 epdm beträgt. Gleichzeitig ist durch die Konstruktion aus einem ersten Garn aus Polyamid und zwei zweiten Garnen aus HMLS-PET die Menge an Polyamid 6.6 weiter verringert. Eine solche Festigkeitsträgerlage weist eine weiter verbesserte thermische Stabilität auf.

Um eine zuverlässige Haftung von textilen Festigkeitsträgern zum Gummi zu gewährleisten, ist es zweckmäßig, dass die Hybridkorde mit einer Haftimprägnierung zur Gewährleistung der Haftung der Festigkeitsträger zum Gummi versehen sind. Beispielsweise kann diese Haftimprägnierung mit einem RFL-Dip im 1- oder 2-Bad-Verfahren erfolgen. Es sind aber auch alle weiteren dem Fachmann bekannten Verfahren und Haftmittel zur Imprägnierung denkbar.

Handelt es sich bei der Festigkeitsträgerlage um eine Gürtelbandage, so ist diese in einem Winkel zwischen 0° und 5° zur Umfangsrichtung einlagig oder mehrlagig ausgebildet, wobei einlagig bevorzugt ist. Ausgebildet bedeutet in diesem Zusammenhang, dass sie in Umfangsrichtung einlagig oder mehrlagig, bevorzugt einlagig, gespult sein kann. Ist die erfindungsgemäße Festigkeitsträgerlage als einzige Festigkeitsträgerlage der Gürtelbandage ausgebildet, so weist der Fahrzeugluftreifen eine gute Ultra-Hochgeschwindigkeitstauglichkeit auf, während das Schrumpfverhalten, die Dimensionsstabilität verbessert und Abplattungen bei Last (Flatspotting) reduziert sind. Gleichzeitig ist durch die einlagige Konstruktion der Rollwiderstand signifikant verringert.

Beim Einsatz der vorbeschriebenen Festigkeitsträgerlage als Wulstverstärker in einem Fahrzeugluftreifen liegt der Vorteil darin, dass diese Festigkeitsträgerlage einen höheren Elastizitäts-Modul und eine größere Zugkraft bei vorgegebener Dehnung als bisher üblicherweise eingesetzte Polyamidfestigkeitsträgerlagen aufweist. Der Wulstverstärker verbessert die Fahrstabilität und das Lenkverhalten.

Entsprechende Vorteile werden auch bei der Verwendung der vorbeschriebenen Festigkeitsträgerlage zur Herstellung von weiteren elastomeren Erzeugnissen, wie Fördergurte, Antriebsriemen, Schläuche und Luftfederbälge erzielt.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen radialen Querschnitt durch einen erfindungsgemäßen Fahrzeugluftreifen;
Fig. 2 ein Kraft-Dehnungskurven von Festigkeitsträgerlagen.

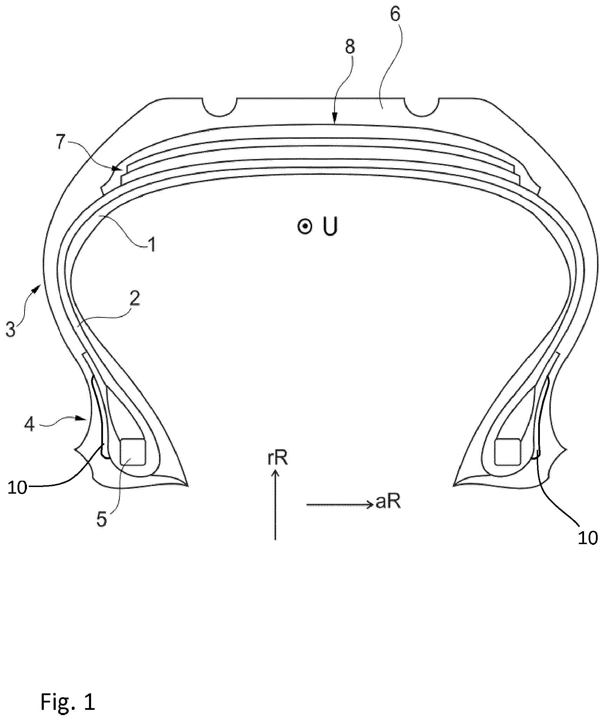

Die Figur 1 zeigt einen radialen Querschnitt durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial außerhalb der Karkasse befindlichen profilierten Laufstreifen 6 und einen zwischen dem Laufstreifen 6 und der Karkasse 2 angeordneten, zwei Festigkeitsträgerlagen beinhaltenden Gürtel 7, welcher radial außen mit der Gürtelbandage 8 abgedeckt ist, welche zumindest eine Festigkeitsträgerlage umfasst. Die Gürtelbandage 8 deckt die Gürtelkanten 9 ab und beinhaltet Festigkeitsträger, die parallel in Umfangsrichtung des Fahrzeugluftreifens entlang der axialen Breite gewickelt und in elastomeres Material eingebettet sind. Weiter weist der Fahrzeugluftreifen einen Wulstverstärker 10 auf. Der Wulstverstärker 10 ist ganz oder teilweise im Wulstbereich 4 angeordnet. Der Wulstverstärker 10 ist axial außerhalb und anschließend an die Karkasse 2 positioniert. Der Wulstverstärker 10 beinhaltet zumindest eine Festigkeitsträgerlage, welche ringkreisförmig im Bereich des Wulstes um den Reifen umläuft.

Der erfindungsgemäße Reifen kann eine erfindungsgemäß ausgeführte Festigkeitsträgerlage der Gürtelbandage 8 und / oder eine erfindungsgemäß ausgeführte Festigkeitsträgerlage des Wulstverstärkers 10 aufweisen. Der Reifen kann auch ohne Wulstverstärker 10 und nur mit erfindungsgemäßer Gürtelbandage 8 ausgeführt sein. Bevorzugt weist jedes der genannten Bauteile 8, 10 genau eine Festigkeitsträgerlage auf.

Weist der Reifen genau eine erfindungsgemäße Festigkeitsträgerlage als einzige Festigkeitsträgerlage der Gürtelbandage 8 auf, so ist dieser Reifen besonders gut für den Ultra-Hochgeschwindigkeitseinsatz geeignet bei gleichzeitig geringem Rollwiderstand und guter Dimensionsstabilität.

Die Festigkeitsträgerlage 8, 10 weist Hybridkorde als Festigkeitsträger auf. Die Hybridkorde weisen jeweils genau drei Garne auf, welche miteinander zum Hybridkord endverdreht sind. Die drei Garne sind ein erstes Garn aus Polyamid, ein zweites Garn aus High Modulus Low Shrinkage Polyethylenterephthalat (HMLS-PET) und ein drittes Garn. Das dritte Garn ist entweder ein erstes Garn aus Polyamid oder ein zweites Garn aus HMLS-PET. Die Feinheit jedes Hybridkordes beträgt dabei mindestens 5000 dtex.

Bei dem Polyamid kann es sich um PA 6.6 handeln. Jedes der drei Garne des Hybridkords kann eine Feinheit von 1000 dtex bis 3000 dtex, bevorzugt eine Feinheit von 1000 dtex bis 2500 dtex, besonders bevorzugt eine Feinheit von 1500 dtex bis 2200 dtex, aufweisen. Die Hybridkorde können mit einer Fadendichte von 50 epdm bis 90 epdm, bevorzugt von 60 epdm bis 80 epdm, innerhalb der Festigkeitsträgerlage angeordnet sein.

Die Hybridkorde sind mit einer Haftimprägnierung wie einem RFL-Dip behandelt.

In einem ersten Ausführungsbeispiel weisen die Hybridkorde die Konstruktion Polyamid 6.6 2100x2 + HMLS-PET 2200x1 auf und sind mit einer Fadendichte von 70 epdm bis 90 epdm innerhalb der Festigkeitsträgerlage angeordnet.

In einem zweiten Ausführungsbeispiel weisen die Hybridkorde die Konstruktion Polyamid 6.6 2100x1 + HMLS-PET 2200x2 auf und sind mit einer Fadendichte von 50 epdm bis 70 epdm innerhalb der Festigkeitsträgerlage angeordnet.

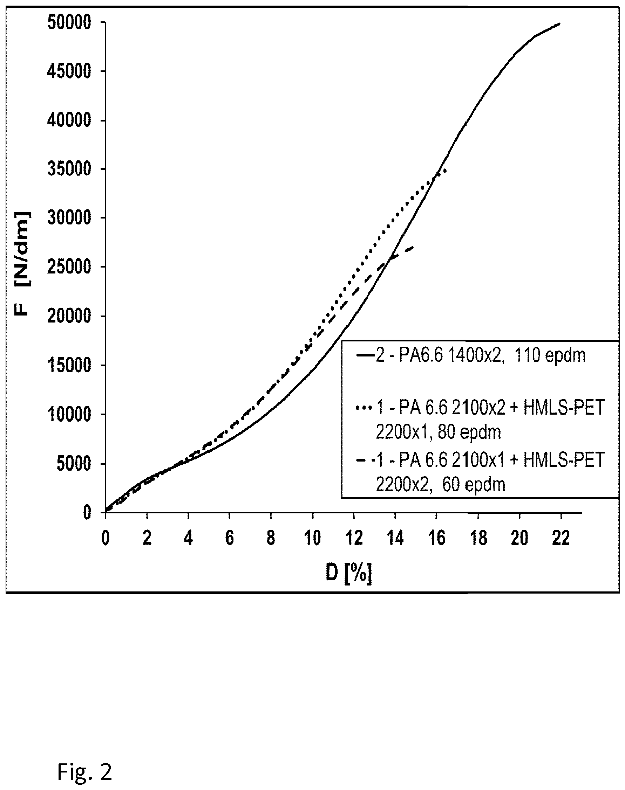

Die Fig.2 gibt Kraft-Dehnungskurven, ermittelt gemäß ASTM D 885 M, von Festigkeitsträgerlagen an. Die horizontale Achse zeigt die Dehnung D in Prozent, die vertikale Achse die Kraft F in Newton pro Dezimeter Festigkeitsträgerlage (senkrecht zur Erstreckungsrichtung der Festigkeitsträger) an.

Es sind Kraft-Dehnungskurven gemäß dem ersten Ausführungsbeispiel und dem zweiten Ausführungsbeispiel dargestellt. Die erfindungsgemäße Festigkeitsträgerlage mit Hybridkorden der Konstruktion Polyamid 6.6 2100x2 + HMLS-PET 2200x1 mit einer Fadendichte von 80 epdm ist mit der punktierten Linie dargestellt. Die erfindungsgemäße Festigkeitsträgerlage mit Hybridkorden der Konstruktion Polyamid 6.6 2100x1 + HMLS-PET 2200x2 mit einer Fadendichte von 60 epdm ist mit der strichlierten Linie dargestellt. Weiter ist als Referenz mit einer durchgehenden Linie die Kraft-Dehnungskurve einer zweilagigen Lagenkonstruktion dargestellt, wobei jede Festigkeitsträgerlage der zweilagigen Lagenkonstruktion als Festigkeitsträger Korde der Konstruktion PA 6.6 1440x2 bei einer Fadendichte von 110 epdm aufweist. Eine solche zweilagige Konstruktion ist üblich für die Gürtelbandage im Ultra-Hochgeschwindigkeits-Einsatz.

Es ist ersichtlich, dass die erfindungsgemäßen Festigkeitsträgerlagen der beiden Ausführungsbeispiele bis zu einer Dehnung von in etwa 4 % ein für den Einsatz in der Gürtelbandage eines Fahrzeugluftreifen ähnlich vorteilhaftes Kraft-Dehnungs-Verhalten wie das zweilagige Referenzbeispiel zeigen. Weiter ist ersichtlich, dass erstaunlicherweise die einlagigen erfindungsgemäßen Ausführungsbeispiele bei steigender Dehnung sogar eine vorteilhafte steilere Kraft-Dehnungs-Kurve aufweisen als das zweilagige Referenzbeispiel. Die Festigkeitsträgerlagen des ersten Ausführungsbeispiels und des zweiten Ausführungsbeispiels sind hervorragend für den Einsatz in einer einlagigen Gürtelbandage eines wie in Fig. 1 gezeigten Fahrzeugluftreifens geeignet.

### Bezugszeichenliste

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Gürtelkante
- 10: Wulstverstärker

- aR: axiale Richtung
- rR: radiale Richtung
- U: Umfangsrichtung

## Patentansprüche

1. Festigkeitsträgerlage für elastomere Erzeugnisse, insbesondere für die Gürtelbandage (8), wobei die Festigkeitsträgerlage Hybridkorde als Festigkeitsträger aufweist, die innerhalb der Lage im Wesentlichen parallel zueinander angeordnet und in elastomeres Material eingebettet sind, wobei die Hybridkorde genau drei Garne aufweisen, wobei ein erstes Garn der Garne aus Polyamid ist und wobei alle Garne eines Hybridkordes miteinander endverdreht sind,
**dadurch gekennzeichnet, dass**
• dass die drei Garne durch das erste Garn aus Polyamid, ein zweites Garn aus High Modulus Low Shrinkage Polyethylenterephthalat (HMLS-PET) und ein drittes Garn gebildet sind,
• dass das dritte Garn aus dem Material des ersten Garns oder aus dem Material des zweiten Garns ausgebildet ist und
• dass die Feinheit jedes Hybridkordes mindestens 5000 dtex beträgt.

2. Festigkeitsträgerlage nach Anspruch 1, **dadurch gekennzeichnet, dass** das erste Garn ein Garn aus Polyamid 6.6 ist.

3. Festigkeitsträgerlage nach einem oder mehreren der vorhergehenden Ansprüche, **dadurch gekennzeichnet, dass** genau zwei Garne des Hybridkords zumindest in ihrem Material und in ihrer Feinheit gleich ausgebildet sind.

4. Festigkeitsträgerlage nach einem oder mehreren der vorhergehenden Ansprüche, **dadurch gekennzeichnet, dass** jedes der drei Garne des Hybridkords jeweils eine Feinheit von 1000 dtex bis 3000 dtex, bevorzugt eine Feinheit von 1000 dtex bis 2500 dtex, besonders bevorzugt eine Feinheit von 1500 dtex bis 2200 dtex, aufweist.

5. Festigkeitsträgerlage nach einem oder mehreren der vorhergehenden Ansprüche, **dadurch gekennzeichnet, dass** die Hybridkorde mit einer Fadendichte von 50 epdm bis 90 epdm, bevorzugt von 60 epdm bis 80 epdm, innerhalb der Festigkeitsträgerlage angeordnet sind.

6. Festigkeitsträgerlage nach einem oder mehreren der vorhergehenden Ansprüche, **dadurch gekennzeichnet, dass** die Hybridkorde die Konstruktion Polyamid 6.6 2100x2 + HMLS-PET 2200x1 aufweisen und mit einer Fadendichte von 70 epdm bis 90 epdm innerhalb der Festigkeitsträgerlage angeordnet sind.

7. Festigkeitsträgerlage nach einem oder mehreren der vorhergehenden Ansprüche, **dadurch gekennzeichnet, dass** die Hybridkorde die Konstruktion Polyamid 6.6 2100x1 + HMLS-PET 2200x2 aufweisen und mit einer Fadendichte von 50 epdm bis 70 epdm innerhalb der Festigkeitsträgerlage angeordnet sind.

8. Fahrzeugluftreifen, enthaltend zumindest eine Festigkeitsträgerlage nach einem der Ansprüche 1 bis 7,

9. Fahrzeugluftreifen nach Anspruch 8, **dadurch gekennzeichnet, dass** die Festigkeitsträgerlage der Gürtelbandage (8) und/oder des Wulstverstärkers (10), bevorzugt der Gürtelbandage (8), ausgebildet ist.

10. Fahrzeugluftreifen nach Anspruch 9, **dadurch gekennzeichnet, dass** die Festigkeitsträgerlage als einzige Festigkeitsträgerlage der Gürtelbandage (8) ausgebildet ist.

## Claims

1. Reinforcement layer for elastomeric products, in particular for the belt bandage (8), where the reinforcement layer has hybrid cords as reinforcement which are arranged within the layer in essence parallel to one another and are embedded into elastomeric material, where the hybrid cords have precisely three yarns, where a first yarn of the yarns is made of polyamide and where the ends of all yarns of a hybrid cord are twisted together,
**characterized in that**
• that the three yarns are composed of the first yarn made of polyamide, a second yarn made of high-modulus low-shrinkage polyethylene terephthalate (HMLS-PET) and a third yarn,
• that the third yarn is composed of the material of the first yarn or of the material of the second yarn and
• that the linear density of each hybrid cord is at least 5000 dtex.

2. Reinforcement layer according to Claim 1, **characterized in that** the first yarn is a yarn made of polyamide 6.6.

3. Reinforcement layer according to one or both of the preceding claims, **characterized in that** precisely two yarns of the hybrid cord are identical at least in terms of their material and their linear density.

4. Reinforcement layer according to one or more of the preceding claims, **characterized in that** the linear density of each of the three yarns of the hybrid cord is respectively 1000 dtex to 3000 dtex, preferably 1000 dtex to 2500 dtex, particularly preferably 1500 dtex to 2200 dtex.

5. Reinforcement layer according to one or more of the preceding claims, **characterized in that** the hybrid cords are arranged with a thread density of 50 epdm to 90 epdm, preferably 60 epdm to 80 epdm, within the reinforcement layer.

6. Reinforcement layer according to one or more of the preceding claims, **characterized in that** the hybrid cords have the structure polyamide 6.6 2100 x 2 + HMLS-PET 2200 x 1 and are arranged with a thread density of 70 epdm to 90 epdm within the reinforcement layer.

7. Reinforcement layer according to one or more of the preceding claims, **characterized in that** the hybrid cords have the structure polyamide 6.6 2100 x1 + HMLS-PET 2200 x 2 and are arranged with a thread density of 50 epdm to 70 epdm within the reinforcement layer.

8. Pneumatic tyre, comprising at least one reinforcement layer according to any of Claims 1 to 7.

9. Pneumatic tyre according to Claim 8, **characterized in that** the reinforcement layer is configured for the belt bandage (8) and/or for the bead reinforcement (10), preferably for the belt bandage (8).

10. Pneumatic tyre according to Claim 9, **characterized in that** the reinforcement layer is configured as single reinforcement layer of the belt bandage (8).

## Revendications

1. Couche de renfort destinée à des produits élastomères, notamment à des bandages de ceinture (8), la couche de renfort comportant comme renforts des câbles hybrides qui sont disposés sensiblement parallèlement les uns aux autres à l'intérieur de la couche et qui sont noyés dans un matériau élastomère, les câbles hybrides comportant exactement trois fils, un premier des fils étant en polyamide et tous les fils d'un câble hybride étant torsadés en bout les uns avec les autres,
**caractérisée en ce que**
• les trois fils sont formés par le premier fil en polyamide, un deuxième fil en polyéthylène téréphtalate à haut module et faible retrait (HMLS-PET) et un troisième fil,
• le troisième fil est formé du matériau du premier fil ou du matériau du deuxième fil et
• la finesse de chaque câble hybride est d'au moins 5000 dtex.

2. Couche de renfort selon la revendication 1, **caractérisée en ce que** le premier fil est un fil en polyamide 6.6.

3. Couche de renfort selon l'une ou plusieurs des revendications précédentes, **caractérisée en ce qu'**exactement deux fils du câble hybride sont conçus pour être identiques, au moins en termes de matériau et de finesse.

4. Couche de renfort selon l'une ou plusieurs des revendications précédentes, **caractérisée en ce que** chacun des trois fils du câble hybride a une finesse de 1000 dtex à 3000 dtex, de préférence une finesse de 1000 dtex à 2500 dtex, de manière particulièrement préférée une finesse de 1500 dtex à 2200 dtex.

5. Couche de renfort selon l'une ou plusieurs des revendications précédentes, **caractérisée en ce que** les câbles hybrides sont disposés à l'intérieur de la couche de renfort avec une densité de fil de 50 epdm à 90 epdm, de préférence de 60 epdm à 80 epdm.

6. Couche de renfort selon l'une ou plusieurs des revendications précédentes, **caractérisée en ce que** les câbles hybrides ont la construction polyamide 6.6 2100x2 + HMLS-PET 2200x1 et sont disposés à l'intérieur de la couche de renfort avec une densité de fil de 70 epdm à 90 epdm.

7. Couche de renfort selon l'une ou plusieurs des revendications précédentes, **caractérisée en ce que** les câbles hybrides ont la construction polyamide 6.6 2100x1 + HMLS-PET 2200x2 et sont disposés à l'intérieur de la couche de renfort avec une densité de fil de 50 epdm à 70 epdm.

8. Pneumatiques de véhicule comportant au moins une couche de renfort selon l'une des revendications 1 à 7.

9. Pneumatique de véhicule selon la revendication 8, **caractérisé en ce que** la couche de renfort du bandage de ceinture (8) et/ou du renfort de bourrelet (10), de préférence du bandage de ceinture (8), est formée.

10. Pneumatique de véhicule selon la revendication 9, **caractérisé en ce que** la couche de renfort est conçue comme la seule couche de renfort du bandage de ceinture (8) .
